(19) **Europäisches Patentamt / European Patent Office / Office européen des brevets**

(11) **EP 2 939 525 A1**

(12) # EUROPEAN PATENT APPLICATION
published in accordance with Art. 153(4) EPC

(43) Date of publication:
**04.11.2015 Bulletin 2015/45**

(21) Application number: **13867446.0**

(22) Date of filing: **20.12.2013**

(51) Int Cl.:
**A01G 1/00** *(2006.01)*　　**C09K 17/08** *(2006.01)*

(86) International application number:
**PCT/JP2013/084226**

(87) International publication number:
**WO 2014/103919 (03.07.2014 Gazette 2014/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.12.2012 JP 2012286523**

(71) Applicant: **Toyo Tire & Rubber Co., Ltd.**
**Osaka-shi, Osaka 550-8661 (JP)**

(72) Inventor: **ISHIZAKA, Nobuyoshi**
**Osaka-shi**
**Osaka 550-8661 (JP)**

(74) Representative: **Hart-Davis, Jason et al**
**Cabinet Beau de Loménie**
**158, rue de l'Université**
**75340 Paris Cedex 07 (FR)**

(54) **ARTIFICIAL SOIL AGGREGATES AND ARTIFICIAL SOIL MEDIUM**

(57)　An artificial soil aggregate which is an aggregate of artificial soil particles is provided. When an artificial soil is formed by filling a container, such as a planter, etc., with the artificial soil aggregates, the volumetric moisture content rate and gas phase fraction of the artificial soil can be improved, and can also be maintained over a long period of time. The artificial soil aggregate 1 is an aggregate of artificial soil particles 10 in which a plurality of fillers 12 having a small hole 11 ranging from the subnanometer to the submicrometer scale are clustered together. A communication hole 13 ranging from the submicrometer to the submillimeter scale is formed between the fillers 12. The artificial soil aggregate 1 has a volumetric moisture content rate of 10 to 40% at a pF ranging from 1.7 to 2.3, and a gas phase fraction of 20 to 80% at a pF of 1.5.

[Figure 2]

EP 2 939 525 A1

**Description**

TECHNICAL FIELD

The present invention relates to artificial soil aggregates which are an aggregate of artificial soil particles, and artificial soil media employing such artificial soil aggregates.

BACKGROUND ART

There have in recent years been an increasing number of plant factories, which allow for growing of plants, such as vegetables, etc., in an environment under controlled growth conditions. In most conventional plant factories, leaf vegetables, such as lettuce, etc., are hydroponically grown. More recently, there has been a move toward attempts to grow root vegetables, which are not suitable for hydroponic cultivation, in a plant factory. In order to grow root vegetables in a plant factory, it is necessary to develop an artificial soil which has good basic soil functions and high quality, and is easy to handle. Artificial soils have been required to have particular functions which are difficult for natural soil to achieve, such as a reduction in the number of times a plant is watered, easier management of the amount of moisture, etc.

Among the artificial soils which have so far been developed is an aggregate-structure zeolite which is an aggregate of zeolite powder particles bonded together using a binder including a water-soluble polymer (see, for example, Patent Document 1). In the aggregate-structure zeolite of Patent Document 1, zeolite particles are aggregated to improve water retentivity so that the porous structure of zeolite, which has poor water retentivity, is utilized for an artificial soil.

Also, a water absorbent aggregate has been developed which is formed by adding pulverized stone powder particles, sands, etc., to polystyrene foam particles, and then melting the polystyrene for granulation (see, for example, Patent Document 2). In Patent Document 2, an attempt has been made to impart good water retentivity and air permeability to the water absorbent aggregate by utilizing voids which are generated by melting the polystyrene foam particles.

CITATION LIST

PATENT LITERATURE

Patent Document 1: Japanese Unexamined Patent Application Publication No. 2000-336356
Patent Document 2: Japanese Unexamined Patent Application Publication No. S53-23892

SUMMARY OF INVENTION

TECHNICAL PROBLEM

When an artificial soil is developed, it is necessary to provide the function of appropriately maintaining water retentivity and air permeability while achieving the ability to grow a plant that is comparable with that of natural soil. In particular, it is important to maintain the volumetric moisture content rate and gas phase fraction of artificial soil at their appropriate levels and thereby provide sufficient moisture available to a plant (available water), in order to reduce the number of times a plant is watered, and provide an optimum schedule for growing a plant, depending on the plant type. The volumetric moisture content rate and gas phase fraction of an artificial soil have a strong relationship with interstices formed between artificial soil particles. By maintaining the interstices in an optimum state, a high value-added artificial soil can be provided which has a well-balanced volumetric moisture content rate and gas phase fraction, and a particular function which is not possessed by natural soil.

In this regard, the aggregate-structure zeolite of Patent Document 1 is formed by only mixing zeolite powder and a binder together in the presence of water and then drying the mixture, and therefore, zeolite is likely to form lumps during the aggregation process, and therefore, appropriate water retentivity or air permeability may not necessarily be provided by interstices formed between zeolite particles. Also, if an artificial soil is, for example, compacted and solidified during work, such as watering, etc., the volumetric moisture content rate and gas phase fraction of the artificial soil are likely to decrease.

On the other hand, water retentivity and air permeability are imparted to the water absorbent aggregate of Patent Document 2 by melting the polystyrene and thereby forming voids in the aggregate. However, it is difficult to control the voids in the aggregate so that the voids have an appropriate size, and therefore, it is difficult to provide a desired volumetric moisture content rate and gas phase fraction for an artificial soil. Also, foam is formed by mixing pulverized stone powder particles, sands, etc., and therefore, the aggregate structure is brittle. Therefore, the aggregate is likely to be finely pulverized and then compacted and solidified due to work, watering, etc., for cultivation, and therefore, the volumetric moisture content rate and gas phase fraction of the artificial soil are likely to decrease.

With the above problems in mind, the present invention has been made. It is an object of the present invention to provide an artificial soil aggregate which is an aggregate of artificial soil particles, that when a container, such as a planter, etc., is filled with the artificial soil aggregate to form an artificial soil, can improve the volumetric moisture content rate and gas phase fraction of the artificial soil and also maintain these features over a long period of time.

SOLUTION TO PROBLEM

To achieve the object, an artificial soil aggregate is provided which is an aggregate of artificial soil particles in which a plurality of fillers having a small hole ranging from the subnanometer to the submicrometer scale are clustered together, a communication hole ranging from the submicrometer to the submillimeter scale being formed between the fillers. The artificial soil aggregate has a volumetric moisture content rate of 10 to 40% at a pF ranging from 1.7 to 2.3, and a gas phase fraction of 20 to 80% at a pF of 1.5.

According to the artificial soil aggregate thus configured, in the artificial soil particle included in the artificial soil aggregate, the small hole of the filler has a size ranging from the subnanometer to the submicrometer scale, and therefore, can effectively take in nutrients required for improving the quality of a plant. Also, the communication hole formed between the fillers clustered together has a size ranging from the submicrometer to the submillimeter scale, and therefore, can effectively take in moisture essential for growing a plant (including available water), whereby the water retentivity can be improved. For the artificial soil aggregate which is an aggregate of the artificial soil particles having such a particular configuration, the volumetric moisture content rate at a pF ranging from 1.7 to 2.3 is set to 10 to 40%, and the gas phase fraction at a pF of 1.5 is set to 20 to 80%. Therefore, a high value-added artificial soil can be provided which has a well-balanced volumetric moisture content rate and gas phase fraction, and a particular function which is not possessed by natural soil.

In the artificial soil aggregate of the present invention, a first interstice ranging from the micrometer to the millimeter scale is preferably formed between the artificial soil particles.

According to the artificial soil aggregate thus configured, a first interstice ranging from the micrometer to the millimeter scale is formed between the artificial soil particles. Therefore, the first interstice can effectively retain moisture available to a plant. As a result, the growth performance of a plant can be improved.

In the artificial soil aggregate of the present invention, the first interstice preferably has a size of 5 to 100 $\mu$m.

According to the artificial soil aggregate thus configured, the first interstice has a size of 5 to 100 $\mu$m. Therefore, an appropriate interstice occurs between the artificial soil aggregates, so that the first interstice can retain a necessary and sufficient amount of moisture available to a plant. As a result, the growth performance of a plant can be further improved.

The artificial soil aggregate of the present invention preferably has a size of 0.2 to 10 mm.

The artificial soil aggregate thus configured has a size of 0.2 to 10 mm. Therefore, the aggregate structure is stable. Moreover, when the grain size is within this range, an appropriate interstice occurs between the artificial soil aggregates, so that good air permeability and water retentivity can be simultaneously obtained.

In the artificial soil aggregate of the present invention, the artificial soil particles preferably have a particle size distribution of 5 to 1000 $\mu$m.

According to the artificial soil aggregate thus configured, the artificial soil particles have a particle size distribution of 5 to 1000 $\mu$m. Therefore, an appropriate interstice is formed in the aggregate structure, and therefore, the volumetric moisture content rate and gas phase fraction of the artificial soil can be improved. Also, the aggregate structure is more stable.

In the artificial soil aggregate of the present invention, the small hole preferably has ion exchange capability.

According to the artificial soil aggregate thus configured, the small hole of the artificial soil particle has ion exchange capability. Therefore, the artificial soil aggregate can hold a fertilizer component for growing a plant. Therefore, an artificial soil medium can be provided which has the ability to glow a plant which is comparable with that of natural soil.

The artificial soil aggregate of the present invention preferably includes a water retention material.

The artificial soil aggregate thus configured includes a water retention material. Therefore, in addition to water retentivity which is inherently possessed by interstices of the artificial soil aggregate, the water retentivity of the water retention material can be additionally provided. As a result, the water retentivity is further improved, and therefore, an artificial soil aggregate can be provided which is highly resistant to dry conditions.

To achieve the object, an artificial soil medium according to the present invention includes the above artificial soil aggregate.

According to the artificial soil medium thus configured, the artificial soil aggregate of the present invention is used. Therefore, well-balanced basic soil functions can be provided while the volumetric moisture content rate and gas phase fraction of an artificial soil are improved over a long period of time. Also, such an artificial soil medium can appropriately supply moisture and nutrients to a plant to be grown, and therefore, is easy to maintenance and handle.

BRIEF DESCRIPTION OF DRAWINGS

[FIG. 1] FIG. 1 is a schematic diagram of an artificial soil particle included in an artificial soil aggregate according to the present invention.
[FIG. 2] FIG. 2 is a schematic diagram of the artificial soil aggregate of the present invention.
[FIG. 3] FIG. 3 is a graph showing a result of measurement of a hole diameter distribution of the artificial soil aggregate of the present invention using mercury intrusion.

DESCRIPTION OF EMBODIMENTS

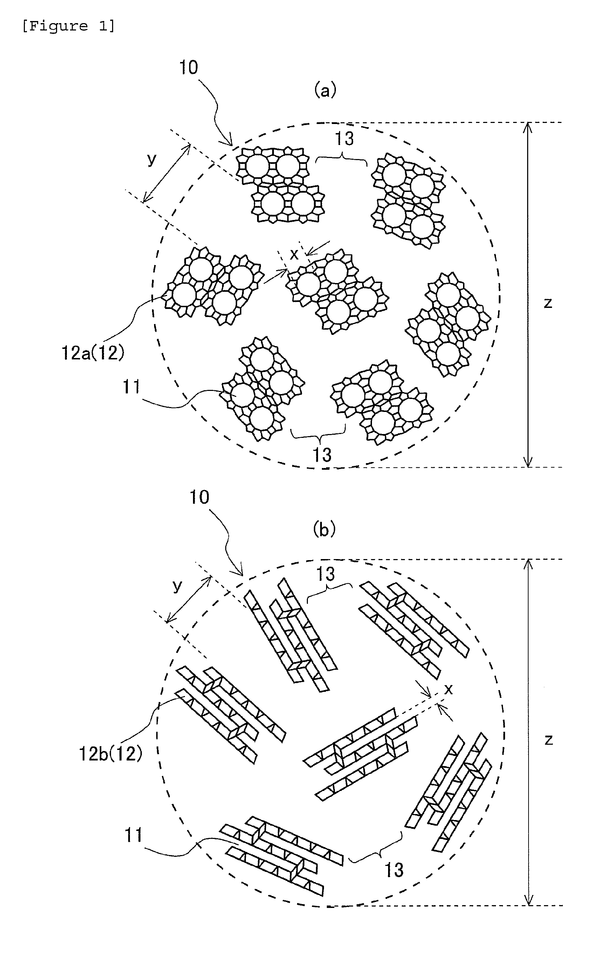

Embodiments of an artificial soil aggregate according to the present invention will now be described with reference to FIGS. 1-3. Note that, for ease of understanding of the present invention, firstly, an artificial soil particle included in the artificial soil aggregate of the present invention will be described. Note that the present invention is not intended to be limited to the embodiments described below and configurations shown in the drawings.

<Artificial Soil Particle>

FIG. 1 is a schematic diagram of an artificial soil particle 10 included in the artificial soil aggregate of the present invention. FIG. 1 shows the concept of the artificial soil particle 10. FIG. 1(a) illustrates an artificial soil particle 10 which employs zeolite 12a, which is a natural porous mineral, as a filler 12. FIG. 1(b) illustrates an artificial soil particle 10 which employs hydrotalcite 12b, which is a natural layered mineral, as a filler 12. Note that symbols x, y and z shown in FIG. 1 represent sizes of a small hole 11 described below, a communication hole 13 described below, and the artificial soil particle 10, respectively. The sizes x, y and z are not to scale in the drawings.

The artificial soil particle 10 is a collection of a plurality of the fillers 12 in the form of a particle. In the artificial soil particle 10, the fillers 12 do not necessarily need to be in contact with each other. If the fillers 12 maintain a relative positional relationship within a predetermined range in a single particle with a binder, etc., being interposed between each filler, the fillers 12 are considered to be clustered together in the form of a particle. The filler 12 of the artificial soil particle 10 has a large number of the small holes 11 extending from the surface to the inside. The small hole 11 is in various forms. For example, when the filler 12 is the zeolite 12a of FIG. 1(a), a void which exists in the crystal structure of the zeolite 12a is the small hole 11. When the filler 12 is the hydrotalcite 12b of FIG. 1(b), an interlayer space which exists in the layered structure of the hydrotalcite 12b is the small hole 11. In other words, the term "small hole" as used herein means a void, interlayer space, space, etc., that exist in the structure of the filler 12 and are not limited to "hole-like" forms.

The size of the small hole 11 of the filler 12 (the average value of the size x in FIG. 1) ranges from the subnanometer to the submicrometer scale. For example, the size of the small hole 11 may be set to about 0.2 to 800 nm. When the filler 12 is the zeolite 12a of FIG. 1(a), the size (diameter) of the void in the crystal structure of the zeolite 12a is about 0.3 to 1.3 nm. When the filler 12 is the hydrotalcite 12b of FIG. 1(b), the size (distance) of the interlayer space in the layered structure of the hydrotalcite 12b is about 0.3 to 3.0 nm. Alternatively, the filler 12 may be formed of an organic porous material described below. In this case, the diameter x of the small hole 11 is about 0.1 to 0.8 $\mu$m.

The communication hole 13 is formed between the fillers 12. The small holes 11 are distributed and arranged around the communication hole 13. The communication hole 13 mainly holds moisture (including available water described below), and therefore, predetermined water retentivity can be imparted to the artificial soil particle 10. The size of the communication hole 13 (the average value of the distance y between adjacent fillers 12 of FIG. 1) ranges from the submicrometer to the submillimeter scale, although it may vary depending on the type, composition, and granulation conditions of the filler 12 or the binder. The size of the communication hole 13 may, for example, be set to about 0.1 to 500 $\mu$m. When the filler 12 is the zeolite 12a of FIG. 1(a) or the hydrotalcite 12b of FIG. 1(b), and a polymeric gelling agent is used as the binder, the size of the communication hole 13 is 0.1 to 20 $\mu$m. The sizes of the small hole 11 and the communication hole 13 may be measured using an optimum technique which is selected from gas adsorption, mercury intrusion, small-angle X-ray scattering, image processing, etc., and a combination thereof, depending on the state of an object to be measured.

The small hole 11 of the filler 12 is preferably formed of a material having ion exchange capability so that the artificial soil particle 10 has sufficient fertilizer retentivity. In this case, the material having ion exchange capability may be a material having cation exchange capability, a material having anion exchange capability, or a mixture thereof. Alternatively, a porous material (e.g., a polymeric foam material, glass foam material, etc.) which does not have ion exchange capability may be separately prepared, the above material having ion exchange capability may be introduced into the small holes of the porous material by injection, impregnation, etc., and the resultant material may be used as the filler 12. Examples of the material having cation exchange capability include cation exchange minerals, humus, and cation exchange resins. Examples of the material having anion exchange capability include anion exchange minerals and anion exchange resins.

Examples of the cation exchange minerals include smectite minerals such as montmorillonite, bentonite, beidellite, hectorite, saponite, stevensite, etc., mica minerals, vermiculite, zeolite, etc. Examples of the cation exchange resins include weakly acidic cation exchange resins and strongly acidic cation exchange resins. Of them, zeolite or bentonite is preferable. The cation exchange minerals and the cation exchange resins may be used in combination. The cation exchange capacity of the cation exchange mineral and cation exchange resin is set to 10 to 700 meq/100 g, preferably 20 to 700 meq/100 g, and more preferably 30 to 700 meq/100 g. When the cation exchange capacity is less than 10 meq/100 g, sufficient nutrients cannot be taken in, and nutrients taken in are likely to flow out quickly due to watering, etc. On the other hand, even when the cation exchange capacity is greater than 700 meq/100 g, the fertilizer retentivity is not significantly improved, which is not cost-effective.

Examples of the anion exchange minerals include natural layered double hydroxides having a double hydroxide as a main framework, such as hydrotalcite, manasseite, pyroaurite, sjogrenite, patina, etc., synthetic hydrotalcite and hydrotalcite-like substances, and clay minerals such as allophane, imogolite, kaolinite, etc. Examples of the anion exchange resins include weakly basic anion exchange resins and strongly basic anion exchange resins. Of them, hydrotalcite is preferable. The anion exchange minerals and the anion exchange resins may be used in combination. The anion exchange capacity of the anion exchange mineral and anion exchange resin is set to 5 to 500 meq/100 g, preferably 20 to 500 meq/100 g, and more preferably 30 to 500 meq/100 g. When the anion exchange capacity is less than 5 meq/100 g, sufficient nutrients cannot be taken in, and nutrients taken in are likely to flow out quickly due to watering, etc. On the other hand, even when the anion exchange capacity is greater than 500 meq/100 g, the fertilizer retentivity is not significantly improved, which is not cost-effective.

<Techniques of Granulating Artificial Soil Particles>

When the filler 12 is formed of a natural inorganic mineral, such as the zeolite 12a or the hydrotalcite 12b shown in FIG. 1, a plurality of the fillers 12 may be clustered together in the form of a particle (the artificial soil particle 10) using a binder. The artificial soil particle 10 may be formed using a binder as follows: a binder, solvent, etc., are added to the filler 12, followed by mixing, and the mixture is introduced into a granulation machine, followed by a known granulation technique, such as tumbling granulation, fluidized bed granulation, agitation granulation, compression granulation, extrusion granulation, pulverization granulation, melting granulation, spraying granulation, etc. The particles thus obtained are optionally dried and classified. Thus, the production of the artificial soil particle 10 is completed. Alternatively, a binder and optionally a solvent, etc., may be added to the filler 12, followed by kneading, the mixture may be dried into a block, and the block may be pulverized using an appropriate pulverization means, such as a mortar and a pestle, hammer mill, roll crusher, etc. Although the particles thus obtained may be directly used as the artificial soil particles 10, the particles may preferably be sieved to obtain ones having a desired particle size.

The binder may be either an organic binder or an inorganic binder. Examples of the organic binder include modified cellulose binders such as ethyl cellulose etc., polyolefin binders, polyvinyl alcohol binders, polyurethane binders, vinyl acetate binders such as vinyl acetate, ethylene-vinyl acetate etc., synthetic resin binders such as urethane resin binders (e.g., urethane resin, vinyl urethane resin, etc.), acrylic resin binders, silicone resin binders, etc., and naturally-occurring binders such as polysaccharides (e.g., starch, carrageenan, xanthan gum, gellan gum, alginic acid, etc.), proteins (e.g., a polyamino acid, animal glue, etc.), etc. Examples of the inorganic binder include silicate binders such as water glass, etc., phosphate binders such as aluminum phosphate, etc., borate binders such as aluminum borate, etc., and hydraulic binders such as cement, etc. The organic and inorganic binders may be used in combination.

When the filler 12 is formed of an organic porous material, the artificial soil particle 10 may be produced by a technique similar to the above granulation technique for the filler 12 using a binder. Alternatively, the artificial soil particle 10 may be produced as follows: the fillers 12 are heated to a temperature which is higher than or equal to the melting point of the organic porous material (a polymeric material, etc.) included in the filler 12 so that the surfaces of the fillers 12 are bonded together by thermal fusion and thereby formed into a particle. In this case, a particle in which the fillers 12 are clustered together can be obtained without using a binder. Examples of such an organic porous material include an organic polymeric foam product which is a foam of an organic polymeric material, such as polyethylene, polypropylene, polyurethane, polyvinyl alcohol, cellulose, etc., and an organic polymer porous product having an open-cell foam structure which is produced by heating and melting powder of the organic polymeric material.

The artificial soil particle 10 may be produced by utilizing the gelling reaction of a polymeric gelling agent. Examples of the gelling reaction of a polymeric gelling agent include a gelling reaction between an alginate, propylene glycol alginate ester, gellan gum, glucomannan, pectin, or carboxymethyl cellulose (CMC), and a multivalent metal ion, and a gelling reaction caused by a double helix structure forming reaction of a polysaccharide, such as carrageenan, agar, xanthan gum, locust bean gum, tara gum, etc. Of them, a gelling reaction between an alginate and a multivalent metal ion will be described. Sodium alginate, which is an alginate, is a neutral salt formed by the carboxyl group of alginic acid bonding with a Na ion. While alginic acid is insoluble in water, sodium alginate is water-soluble. When an aqueous solution of sodium alginate is added to an aqueous solution containing a multivalent metal ion (e.g., a Ca ion), sodium alginate molecules are ionically cross-linked together to form a gel. In this embodiment, the gelling reaction may be performed by the following steps. Initially, an alginate is dissolved in water to formulate an aqueous solution of the alginate, and the fillers 12 are added to the aqueous alginate solution, followed by thorough stirring, to form a mixture solution which is the aqueous alginate solution in which the fillers 12 are dispersed. Next, the mixture solution is dropped into an aqueous solution of a multivalent metal ion, thereby gelling the alginate contained in the mixture solution into particles. Thereafter, the gelled particles are collected, followed by washing with water and then thorough drying. As a result, the artificial soil particle 10 is obtained which is a particle formed of an alginate gel including an alginate and a multivalent metal ion, in which the fillers 12 are dispersed.

Examples of an alginate which can be used in the gelling reaction include sodium alginate, potassium alginate, and ammonium alginate. These alginates may be used in combination. The concentration of the aqueous alginate solution is 0.1 to 5% by weight, preferably 0.2 to 5% by weight, and more preferably 0.2 to 3% by weight. When the concentration of the aqueous alginate solution is less than 0.1% by weight, the gelling reaction is less likely to occur. When the concentration of the aqueous alginate solution exceeds 5% by weight, the viscosity of the aqueous alginate solution is excessively high, and therefore, it is difficult to stir the mixture solution containing the filler 12 added, and drop the mixture solution to the aqueous multivalent metal ion solution.

The aqueous multivalent metal ion solution to which the aqueous alginate solution is dropped may be any aqueous solution of a divalent or higher-valent metal ion that reacts with the alginate to form a gel. Examples of such an aqueous multivalent metal ion solution include an aqueous solution of a multivalent metal chloride such as calcium chloride, barium chloride, strontium chloride, nickel chloride, aluminum chloride, iron chloride, cobalt chloride, etc., an aqueous solution of a multivalent metal nitrate such as calcium nitrate, barium nitrate, aluminum nitrate, iron nitrate, copper nitrate, cobalt nitrate, etc., an aqueous solution of a multivalent metal lactate such as calcium lactate, barium lactate, aluminum lactate, zinc lactate, etc., and an aqueous solution of a multivalent metal sulfate such as aluminum sulfate, zinc sulfate, cobalt sulfate, etc. These aqueous multivalent metal ion solutions may be used in combination. The concentration of the aqueous multivalent metal ion solution is 1 to 20% by weight, preferably 2 to 15% by weight, and more preferably 3 to 10% by weight. When the concentration of the aqueous multivalent metal ion solution is less than 1% by weight, the gelling reaction is less likely to occur. When the concentration of the aqueous multivalent metal ion solution exceeds 20% by weight, it takes a long time to dissolve the metal salt, and an excessive amount of the material is required, which is not cost-effective.

The artificial soil particle 10 may be designed so that the water retentivity of the communication hole 13 is increased. An example technique of improving the water retentivity of the communication hole 13 is to introduce a water retention material into the communication hole 13 of the artificial soil particle 10. The water retention material may, for example, be introduced into the communication hole 13 by filling the entire communication hole 13 with the water retention material or coating a surface of the communication hole 13 with a film of the water retention material. In this case, the water retention material may be provided to at least a portion of the communication hole 13. The water retention material may, for example, be introduced by impregnating the artificial soil particle 10 with a polymer solution which is formulated by dissolving a polymeric material having water retentivity in a solvent. Alternatively, during granulation of the artificial soil particles 10, a fiber having water retentivity may be mixed with a material for the artificial soil particle 10. In this case, the fiber which is a water retention material may be introduced not only into the communication hole 13 of the artificial soil particle 10, but also into the entire artificial soil particle 10. The artificial soil particle 10 including the introduced fiber, of course, has improved water retentivity, and also has improved strength or durability. Therefore, the fiber introduced as a water retention material also functions as a reinforcing material. Examples of the fiber which may be introduced into the artificial soil particle 10 include synthetic fibers such as vinylon, urethane, nylon, acetate, etc., and naturally-occurring fibers such as cotton, wool, rayon, cellulose, etc. Of these fibers, vinylon and cotton are preferable. Moreover, the form of the fiber is preferably short fiber. The artificial soil particle 10 including the introduced water retention material has significantly improved water retentivity. Therefore, for example, even when the artificial soil particle 10 is used in a dry external environment, the death or growth failure of a plant can be reduced or prevented even if water is not supplied to the plant over a long period of time. Moreover, the introduced water retention material also improves the strength and durability of the artificial soil particle 10, leading to a synergistic effect of maintaining water retentivity over a long period of time.

Examples of a polymeric material which can be used as the water retention material include synthetic polymer water retention materials, such as polyacrylate polymers, polysulfonate polymers, polyacrylamide polymers, polyvinyl alcohol polymers, polyalkylene oxide polymers, etc., and naturally-occurring polymer water retention materials, such as polyaspartate polymers, polyglutamate polymers, polyalginate polymers, cellulose polymers, starch, etc. These water retention materials may be used in combination.

As the solvent for dissolving the polymeric material which is used as the water retention material, selected is one which can well dissolve the polymeric material which is used. In other words, suitably selected is a combination of a polymeric material and a solvent which have their solubility parameter values (SP values) close to each other. For example, a combination of a polymeric material and a solvent whose SP values have a difference of 5 or less (e.g., a combination of nitro cellulose, having an SP value of about 10, and methanol, having an SP value of about 14.5) is selected. Examples of such a solvent include methanol, ethanol, isopropanol, butanol, ethyl acetate, acetone, methyl ethyl ketone, and methyl isobutyl ketone. These solvents may be used in combination.

Another technique of improving the water retentivity of the communication hole 13 is to use a water retention filler as all or a portion of the filler 12 which is a material, during formulation of the artificial soil particle 10. In this case, the generated artificial soil particle 10 itself has water retentivity, and therefore, a particular post-treatment for improving water retentivity is not required. As the water retention filler, a hydrophilic filler or a porous particle may be employed. Examples of the hydrophilic filler include zeolite, smectite minerals, mica minerals, talc, silica, double hydroxides, etc. Examples of the porous particle include foam glass, porous metals, porous ceramics, polymer porous materials, hydrophilic fibers, etc.

<Artificial Soil Aggregate>

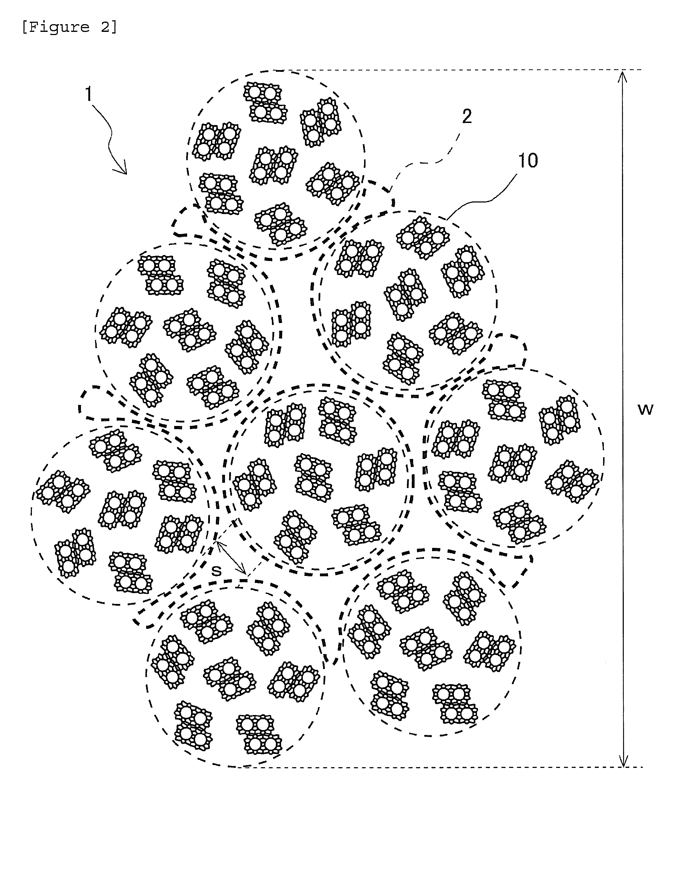

FIG. 2 is a schematic diagram of an artificial soil aggregate 1 according to the present invention. FIG. 2 shows the concept of the artificial soil aggregate 1. The artificial soil aggregate 1 of the present invention is an aggregate of the artificial soil particles 10. The artificial soil aggregates 1 are loaded in a container, such as a planter, etc., in use.

When a plant is grown using an artificial soil, it is necessary to sufficiently improve the water retentivity and air permeability of the artificial soil in order to achieve the ability to grow a plant that is comparable with that of natural soil. Here, the water retentivity of soil has a close relationship with moisture contained in the soil. Moisture contained in soil falls into two categories, i.e., one which can be absorbed by a plant and one which cannot be absorbed by a plant, depending on a state of the moisture held by the soil. Typically, soil includes soil particles having various sizes, and moisture contained in the soil is held by interstices formed between the soil particles due to capillary action, etc. Moisture contained in soil falls into three categories, depending on the adsorption force with respect to the soil. The three categories are gravitational water, capillary water, and hydroscopic water, which are in order of adsorption force, with the lowest first. Of moisture contained in soil, moisture which can be easily absorbed by a plant is herein referred to as "available water." The air permeability of soil has a relationship with a state of interstices formed between soil particles. In order to supply oxygen sufficient to grow plant roots, at least a predetermined gas phase fraction (the fraction of the volume of interstices (gas phase) over the total volume of soil) is required. The total volume of soil refers to the total volume of three soil phases, i.e., a gas phase, liquid phase, and solid phase. In order to provide a soil suitable for growing a plant, it is necessary to examine a relationship between the available water capacity per 100 ml of the soil and the gas phase fraction of the soil. The artificial soil aggregate 1 of the present invention is an aggregate of the artificial soil particles 10 including a collection of a plurality of the fillers 12 having the small hole 11 ranging from the subnanometer to the submicrometer scale, with the communication hole 13 ranging from the submicrometer to the submillimeter scale being formed between the fillers 12, whereby an appropriate relationship is established between the available water capacity and the gas phase fraction.

The artificial soil aggregate 1 includes a plurality of the artificial soil particles 10. In the artificial soil aggregate 1, the artificial soil particles 10 do not necessarily need to be in contact with each other. The artificial soil particles 10 only need to maintain a relative positional relationship within a predetermined range in a single aggregate with a binder, etc., being interposed between the artificial soil particles 10. Voids are formed between the artificial soil particles 10 included in the artificial soil aggregate 1, and can absorb and maintain moisture from the outside. As used herein, the interstice formed between the artificial soil particles 10 is referred to as a "first interstice," which is indicated by reference numeral 2.

The available water capacity and the gas phase fraction have a relationship with a size of the first interstice 2 formed in the aggregate structure of the artificial soil aggregate 1. If the size of the first interstice 2 is excessively large, the ability to retain moisture in the first interstice 2 is reduced, and therefore, moisture cannot be retained in the aggregate structure against the force of gravity. As a result, the available water capacity decreases, and therefore, the gas phase fraction increases, so that moisture available to a plant decreases, and therefore, a plant may die. On the other hand, if the size of the first interstice 2 is excessively small, the ability to retain moisture in the aggregate structure increases. As a result, the available water capacity decreases, and therefore, a plant cannot easily absorb moisture. Also, the gas phase fraction of the soil decreases, and therefore, moisture damage to a plant is likely to occur. In other words, the first interstice 2 functions as a water retention interstice which retains a large amount of moisture available to a plant. The size of the first interstice 2 (the average value of a size s of the first interstice 2 in FIG. 2) may vary depending on the type and composition of the artificial soil particle 10 or binder, and granulation conditions. Typically, the first interstice 2 is adjusted to the micrometer to millimeter scale, e.g., 1 $\mu$m to 1 mm. The size of the first interstice 2 is preferably 2 to 500 $\mu$m, more preferably 5 to 100 $\mu$m.

Also, the size of the first interstice 2 has a relationship with the particle size distribution of the artificial soil particles 10 included in the artificial soil aggregate 1. In order to obtain an appropriate size of the first interstice 2, the particle size distribution of the artificial soil particles 10 is adjusted to the range of 5 to 1000 $\mu$m, preferably the range of 10 to 500 $\mu$m. If the particle size distribution of the artificial soil particles 10 is broader than the range of 5 to 1000 $\mu$m, it is likely that the first interstice 2 cannot be formed in a stable state.

Moreover, the size of the first interstice 2 has a relationship with the size z of the artificial soil particle 10 included in the artificial soil aggregate 1. In order to obtain an appropriate size of the first interstice 2, the average value (average particle size) of the sizes z of the artificial soil particles 10 is adjusted to 20 to 500 $\mu$m, preferably 30 to 300 $\mu$m. If the average particle size of the artificial soil particles 10 is smaller than 20 $\mu$m, a hole diameter of the first interstice 2 is excessively small, so that the ability of the first interstice 2 to retain moisture is high, and therefore, it is difficult for a plant to absorb moisture. Also, if the average particle size of the artificial soil particles 10 is greater than 500 $\mu$m, the size of the first interstice 2 is excessively large, so that the ability of the first interstice 2 to retain moisture is low, and therefore, moisture easily flows out of the first interstice 2 due to the force of gravity.

Incidentally, when the artificial soil aggregates 1 are loaded in a container, such as a planter, etc., to form an artificial soil medium which is an actual form in use, interstices are formed between the artificial soil aggregates 1. As used herein, the interstice formed between the artificial soil aggregates 1 is distinguished from the first interstice 2 formed between the artificial soil particles 10, and is referred to as a "second interstice." The second interstice retains moisture, and has an important role in providing the air permeability of the artificial soil medium. The second interstice is a so-called rough interstice. Because the second interstice has a large interstice size, moisture contained in the second interstice easily drains as gravitational water from the artificial soil medium, and a space from which moisture has drained serves as a space for providing the air permeability of the artificial soil medium. In contrast to this, the first interstice 2 has a small interstice size, and therefore, moisture contained in the first interstice 2 does not easily drain away as gravitational water, and is retained in the first interstice 2. Because of the moisture retained in the first interstice 2, water is available to a plant over a long period of time.

The second interstice between the artificial soil aggregates 1 serves as a space in which plant roots grow and absorb oxygen. Therefore, if the second interstice is lack, so that the air permeability of the artificial soil medium deteriorates, moisture damage to a plant may occur. On the other hand, if the air permeability of the artificial soil medium is excessively high, the amount of moisture retained in the artificial soil medium decreases, and therefore, the amount of moisture available to a plant decreases. Therefore, in order to maintain the second interstice between the artificial soil aggregates 1 at an appropriate level, it is necessary to set the size of the artificial soil aggregate 1 to an appropriate size. The size (the average value of a size w of the artificial soil aggregate 1 of FIG. 2) of the artificial soil aggregate 1 is 0.2 to 10 mm, preferably 0.5 to 10 mm, and more preferably 1 to 10 mm. If the size of the artificial soil aggregate 1 is less than 0.2 mm, the second interstice is small, so that the degree of adsorption between the artificial soil aggregate 1 and moisture increases, and therefore, drainage performance decreases, and therefore, moisture damage to a plant may occur. As a result, it is difficult for a plant grown to absorb oxygen through its roots, and therefore, root rot is likely to occur. On the other hand, if the size of the artificial soil aggregate 1 exceeds 10 mm, the second interstice is large, so that the degree of adsorption between the artificial soil aggregate 1 and moisture decreases, and therefore, moisture excessively drains away due to the force of gravity. As a result, it is difficult for a plant to absorb moisture and the artificial soil medium is sparse, and therefore, a plant is likely to fall down.

The size of the artificial soil aggregate 1, the size of the first interstice 2 between the artificial soil particles 10, and the particle size of the artificial soil particle 10 may, for example, be measured by optical microscopic observation and image processing. In this embodiment, the size of the artificial soil aggregate 1, the size of the first interstice 2, and the particle size of the artificial soil particle 10 are measured by the following measurement technique. Initially, an artificial soil particle to be measured is observed along with a ruler using a microscope. The microscopic image is obtained using an image processing software system (a two-dimensional image analysis software system "WinROOF," produced by MITANI Corporation). One hundred artificial soil aggregates or particles are selected from the image, and the outlines of the artificial soil aggregates, first interstices, or artificial soil particles are traced. Based on the perimeter of the traced shape, the diameter of a circle corresponding to the perimeter of the traced shape is calculated. The average of the diameters of such circles (number: 100) obtained from the respective artificial soil aggregates, first interstices, or artificial soil particles is referred to as the average size (unit: pixel). Thereafter, the average size is converted into a unit length ($\mu$m to mm scale) by comparing it with the ruler in the image, thereby calculating the size of the artificial soil aggregate, the size of the first interstice, or the particle size of the artificial soil particle.

The artificial soil aggregate 1 is formed by aggregating a plurality of the artificial soil particles 10. The aggregation may be achieved using a technique similar to the above technique of granulating the artificial soil particles 10. The artificial soil aggregate 1 of the present invention is formed by granulating the artificial soil particles 10 using a binder or aggregating the artificial soil particles 10 by gelling using a polymeric gelling agent, and therefore, the first interstice 2 between the artificial soil particles 10 is fixed by the binder or polymeric gelling agent. Therefore, an artificial soil medium including the artificial soil aggregates 1 has sufficient strength. Therefore, a situation that the soil is, for example, compacted and solidified, resulting in, for example, a decrease in available water capacity and air permeability, is reduced or prevented, whereby an amount of available water required for a plant can be supplied over a long period of time. Note that when the artificial soil aggregate 1 is formed, the artificial soil particle 10 may include different types of artificial soil particles. Also, in addition to the artificial soil particle 10, an additive, such as a fertilizer, pigment, aroma chemical, fungicide, antimicrobial, air freshener, insecticide, etc., may be mixed into the aggregate. Moreover, when the artificial soil aggregate 1 is formed, a water retention material may be introduced into the first interstice 2. In this case, a water retention material similar to that of the artificial soil particle 10 may be introduced using a technique similar to that of the artificial soil particle 10.

<Water Retentivity and Air Permeability of Artificial Soil Aggregate>

Soil, which includes soil particles having various sizes, retains moisture in interstices between the soil particles due to capillary action, etc. The force which soil exerts to retain moisture is represented by a pF value. The pF value refers to the common logarithmic value of the absorption pressure of soil moisture represented by the height of the water column, which indicates how strongly soil moisture is attracted by the capillary force of soil. The pF value which is 2.0 corresponds to a pressure represented by a water column of 100 cm. The pF value also indicates the strength of adsorption between soil and moisture. If the adsorption force between soil and moisture is weak, the pF value is low and plant roots easily absorb moisture. On the other hand, if the adsorption force between soil and moisture is strong, the pF value is high and plant roots require a great force to absorb moisture. If air is not present in the interstices of soil, and all the interstices are filled with water, the pF value is zero. If soil is thermally dried at 100°C, and only water chemically bonded with the soil is present, the pF value is 7. Soil moisture which can be absorbed by plant roots ranges from moisture (pF: 1.7) remaining in soil typically 24 hours after rain or watering to moisture at the initial wilting point, where a plant begins wilting (pF: 3.8). In general, the pF value of a soil which can grow a plant (so-called available water) is within the range of 1.7 to 2.7. However, when the present inventors actually grew plants, the present inventors found that when the pF value exceeds 2.3, the growth performance of a plant tends to decrease. Therefore, in the present invention, the range of 1.7 to 2.3 is defined as the available water range of an artificial soil medium. The pF value may be measured using a pF-meter (tensiometer).

In the present invention, the amount of moisture at a pF ranging from 1.7 to 2.3 (available water capacity) is represented by the volumetric moisture content rate ($VWC_{1.7-2.3}$) per 100 ml of the artificial soil aggregates. The $VWC_{1.7-2.3}$ (%) is calculated by:

$$VWC_{1.7-2.3}\ (\%) = ((W_{2.3} - Wd)/100 - (W_{1.7} - Wd)/100) \times 100 \tag{1}$$

where Wd represents the mass of the artificial soil aggregate 1 in a dry state, $W_{1.7}$ represents the mass of the artificial soil aggregate 1 at a pF of 1.7, and $W_{2.3}$ represents the mass of the artificial soil aggregate 1 at a pF of 2.3.

In Expression (1), for example, ($W_{2.3}$ - Wd) indicates the amount of moisture retained in the artificial soil aggregate 1 at a pF of 2.3, which is represented by weight (mg). However, because the specific gravity of water is 1, the value (mg) of ($W_{2.3}$ - Wd) can be directly regarded as the volume (ml) of moisture retained at a pF of 2.3. The volumetric moisture content rate (%) of the artificial soil aggregate 1 of the present invention at a pF ranging from 1.7 to 2.3 is adjusted to 10 to 40%, preferably 13 to 30%, and more preferably 20 to 30%.

In general, the volumetric moisture content rate (%) at a pF ranging from 1.7 to 2.3 needs to be maintained at 10% or more in order to allow a plant to grow by absorbing soil moisture. In other words, if the volumetric moisture content rate (%) at a pF ranging from 1.7 to 2.3 can be maintained at 10% or more over a long period of time, the growth performance of a plant does not decrease even when the number of times of watering is reduced, and therefore, maintenance, such as watering, etc., can be reduced. As described above, the artificial soil medium of the present invention includes the first and second interstices, and therefore, can retain water over a long period of time. With this configuration, if the volumetric moisture content rate (%) of the artificial soil medium at a pF ranging from 1.7 to 2.3 is set to the above range, available water is effectively retained in the first and second interstices, and therefore, the volumetric moisture content rate (%) at a pF ranging from 1.7 to 2.3 can be maintained at 10% or more over a long period of time, whereby maintenance, such as watering, etc., can be reduced.

Also, the gas phase fraction of soil needs to be appropriately adjusted in order to grow a plant. For example, when the pF value is low, then if the moisture content rate is high, moisture damage to a plant is likely to occur. Therefore, the air permeability of soil needs to be maintained at a predetermined level or more even when the pF value is low. An index for the air permeability of soil at a low pF value is represented by a gas phase fraction at a pF of 1.5. The "pF of 1.5" refers to a state of moisture remaining in soil typically 24 hours after watering of 30 to 50 mm or more per day (drainage due to the force of gravity is almost completed). The gas phase fraction at a pF of 1.5 needs to be set to 20% or more in order to sufficiently grow a plant planted in the soil. The gas phase fraction at a pF of 1.5 of the artificial soil aggregate 1 of the present invention is adjusted to 20 to 80%, preferably 20 to 60%. As a result, the artificial soil aggregate 1 of the present invention imparts a well-balanced volumetric moisture content rate and gas phase fraction to an artificial soil, and therefore, can provide a high value-added artificial soil which has a particular function which is not possessed by natural soil. Specifically, an optimum amount of moisture available to a plant (available water) can be reliably provided, whereby the number of times a plant is watered can be reduced, and an optimum schedule for growing a plant can be provided, depending on the plant type.

Examples

Examples of the artificial soil aggregate of the present invention will now be described.

<Production of Artificial Soil Particle>

Zeolite and hydrotalcite were used as the filler, sodium alginate was used as the alginate, and 5% aqueous calcium chloride solution was used as the aqueous multivalent metal ion solution. A reagent sodium alginate manufactured by Wako Pure Chemical Industries, Ltd., was dissolved in water to formulate an aqueous solution having a concentration of 0.5%. Ten parts by weight of an artificial zeolite "Ryukyu-lite 600," manufactured by ECOWEL Inc., and 10 parts by weight of a reagent hydrotalcite manufactured by Wako Pure Chemical Industries, Ltd., were added to 100 parts by weight of the 0.5% aqueous sodium alginate solution, followed by mixing. The mixture solution was dropped into 5% aqueous calcium chloride solution at a rate of one drop/sec. After the droplets were gelled to form particles, the gel particles were collected, and then washed with water, followed by drying using a drying machine at 55°C for 24 h. The dried gel particles were pulverized using a mortar, and then classified by sieving to obtain artificial soil particles having a particle size between 75 $\mu$m and 106 $\mu$m. In the artificial soil particle thus obtained, a plurality of fillers having a small hole ranging from the subnanometer to the submicrometer scale were clustered together, with a communication hole ranging from the submicrometer to the submillimeter scale being formed between the fillers.

<Production of Artificial Soil Aggregate>

Fifty milliliters of 20% aqueous vinyl acetate emulsion solution (vinyl acetate emulsion: "BONDO (registered trademark) for wood," manufactured by Konishi Co., Ltd.) was added to 100 ml of the artificial soil particles, and allowed to permeate into the entire artificial soil particle, followed by drying at 80°C for 48 h for solidification. A solidified mass of the artificial soil particles in the shape of a block was pulverized using a mortar, and then classified by sieving to obtain artificial soil aggregates having a grain size between 0.25 mm and 2 mm. The artificial soil aggregate thus obtained had interstices ranging from the micrometer to millimeter scale between the artificial soil particles included in the artificial soil aggregate.

<Measurement of Volumetric Moisture Content Rate and Gas Phase Fraction of Artificial Soil Aggregate>

The volumetric moisture content rate of the artificial soil aggregate at a pF ranging from 1.7 to 2.3 was obtained using Expression (1) described in the above section "Water Retentivity and Air Permeability of Artificial Soil Aggregate."

Also, the gas phase fraction of the artificial soil aggregate at a pF of 1.5 was determined using the following procedure. A sample was produced by immersing an artificial soil medium including the artificial soil aggregate in tap water for 24 h so that the artificial soil medium was saturated with water. The sample was allowed to stand for 1 h. The gravitational water of the sample was allowed to drain away. After confirming that the pF value of the sample determined using a pF-meter (tensiometer) was 1.5, the sample was collected and then placed in a 100-mL sample cylinder while keeping the shape of the sample as unchanged as possible. The sample cylinder was loaded in a digital actual volumenometer "DIK-1150," manufactured by Daiki Rika Kogyo Co., Ltd., followed by measurement. The value obtained by the measurement was defined as the gas phase fraction of the artificial soil aggregate at a pF of 1.5.

As a result of the measurement, the volumetric moisture content rate of the artificial soil aggregate at a pF ranging from 1.7 to 2.3 was 14%, and the gas phase fraction at a pF of 1.5 of the artificial soil aggregate was 40%. These volumetric moisture content rate and gas phase fraction fall within the ranges of the present invention.

(Measurement of Size of First Interstice of Artificial Soil Aggregate)

Procedures for producing the artificial soil particle and the artificial soil aggregate, and the first interstice of the artificial soil aggregate, will now be described.

<Production of Artificial Soil Particle>

Zeolite was used as the filler, sodium alginate was used as the alginate, and 5% aqueous calcium chloride solution was used as the aqueous multivalent metal ion solution. A reagent sodium alginate manufactured by Wako Pure Chemical Industries, Ltd., was dissolved in water to formulate an aqueous solution having a concentration of 0.5%. Twenty parts by weight of an artificial zeolite "Ryukyu-lite 600," manufactured by ECOWEL Inc., was added to 100 parts by weight of the 0.5% aqueous sodium alginate solution, followed by mixing. The mixture solution was dropped into 5% aqueous calcium chloride solution at a rate of one drop/sec. After the droplets were gelled to form particles, the gel particles were collected, and then washed with water, followed by drying using a drying machine at 55°C for 24 h. The dried gel particles were pulverized using a mortar, and then classified by sieving to obtain artificial soil particles having a particle size between 0.1 mm and 0.25 mm.

<Production of Artificial Soil Aggregate>

The artificial soil particles were immersed in water to be saturated with water, and then allowed to stand for 1h, so that gravitational water was allowed to drain away. One hundred milliliters of the artificial soil particles containing water were mixed with 50 ml of 20% aqueous vinyl acetate emulsion solution (vinyl acetate emulsion: "BONDO (registered trademark) for wood," manufactured by Konishi Co., Ltd.), followed by drying at 80°C for 48 h for solidification. A solidified mass of the artificial soil particles in the shape of a block was pulverized using a mortar, and then classified by sieving to obtain artificial soil aggregates having a grain size of about 3 mm.

<First Interstice of Artificial Soil Aggregate>

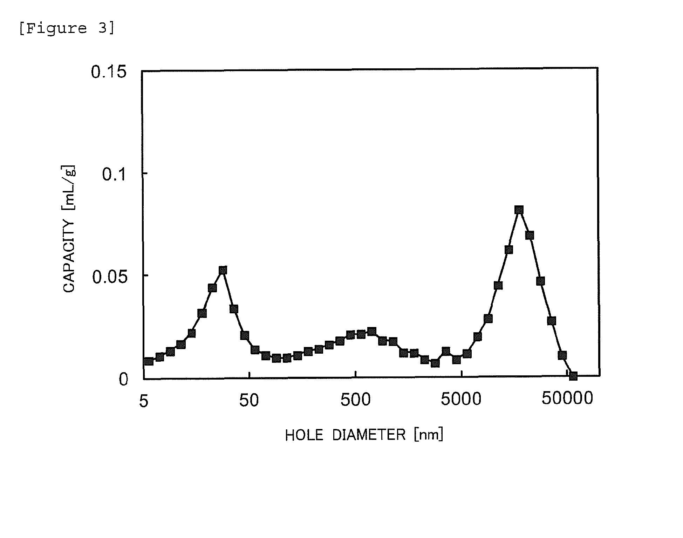

The hole diameter distribution was measured using mercury intrusion in order to verify that the artificial soil aggregate of the present invention has porous structure. FIG. 3 is a graph showing a result of the measurement of the hole diameter distribution of the artificial soil aggregate of the present invention using mercury intrusion. For the artificial soil aggregate of the present invention, three peaks were observed as shown in FIG. 3. The peak at about 30 nm seems to be caused by a minute void formed between the fillers. The peak at about 700 nm seems to be caused by the communication hole. The peak at about 20 $\mu$m seems to be caused by the first interstice. Thus, it was demonstrated that the artificial soil aggregate of the present invention has a particular porous structure having at least three size distributions including the communication hole ranging from the submicrometer to the submillimeter scale, and the first interstice ranging from the micrometer to the millimeter scale, in addition to the filler's small hole ranging from the subnanometer to the submicrometer scale.

(Growth Performance of Radish in Artificial Soil Aggregate)

A test was conducted to evaluate the growth performance of a radish using the artificial soil aggregate of the present invention.

<Production of Artificial Soil Particle>

Artificial soil particles used in Examples 1 to 23 and Comparative Examples 1 to 6 were produced which includes, as the filler, at least one of zeolite ("Ryukyu-lite CEC600," manufactured by Ecowel Inc.), bentonite (manufactured by Kasanen Industry Co., Ltd.), and a cation exchange resin (manufactured by Organo Corporation), which are materials (cation exchange materials) having cation exchange capability, and at least one of hydrotalcite (manufactured by Wako Pure Chemical Industries, Ltd.) and an anion exchange resin (manufactured by Organo Corporation), which are materials (anion exchange materials) having anion exchange capability, according to the mixture ratios (parts by weight) described in Tables 1 to 3 below, where these fillers were solidified using a binder. As the binder, used was sodium alginate (manufactured by Wako Pure Chemical Industries, Ltd.), potassium alginate (manufactured by Kimica Corporation), agar (manufactured by Wako Pure Chemical Industries, Ltd.), or a mixture of xanthan gum (SOAXAN (registered trademark) XG550, manufactured by MRC Polysaccharide) and locust bean gum (SOALOCUST (registered trademark) A120, manufactured by MRC Polysaccharide).

When sodium alginate and potassium alginate were used, the filler was added to 0.5% aqueous sodium alginate solution or 1% aqueous potassium alginate solution, followed by stirring for 3 min using a mixer (SM-L57, manufactured by Sanyo Electric Co, Ltd.). The mixture solution thus obtained was dropped into 5% aqueous calcium chloride solution, which is an aqueous multivalent metal ion solution, to produce a gelled product. The gelled product thus produced was collected from the solution and then washed, followed by drying using a drying machine at 55°C for 24 h, to produce an artificial soil particle.

When agar and a mixture of xanthan gum and locust bean gum were used, a filler was added to 1% agar solution or a mixture solution of 0.5% xanthan gum and 0.5% locust bean gum, and the temperature of the mixture was increased to 80°C or more, so that the polysaccharides were dissolved in the mixture. Thereafter, the mixture was cooled to room temperature to produce a gelled product. The gelled product thus produced was dried using a drying machine at 50°C for 24 h. The resultant solid was pulverized, and then classified by sieving to produce an artificial soil particle.

<Production of Artificial Soil Aggregate>

Artificial soil aggregates used in Examples 1 to 23 and Comparative Examples 1 to 6 were produced by solidifying artificial soil particles having a particle size distribution described in Tables 1 to 3 below using a binder. As the binder, used were a vinyl acetate resin-based adhesive "BONDO (registered trademark) for wood," manufactured by Konishi Co., Ltd., a polyethylene-mixed emulsion ("SEPOLSION (registered trademark) G315," manufactured by Sumitomo Seika Chemicals Company Limited), agar (manufactured by Wako Pure Chemical Industries, Ltd.), an acrylamide (manufactured by Wako Pure Chemical Industries, Ltd.), a urethane resin emulsion (craft bond adhesive for fabric and felt manufactured by Hamanaka), and ethyl cellulose (manufactured by Nissin-kasei Co., Ltd.). A method for producing an artificial soil aggregate using the above binders will now be described. In Tables 1 to 3, the binders for aggregation are indicated by "+."

A method for producing an artificial soil aggregate using a vinyl acetate resin-based adhesive as a binder (Examples 1 to 15 and 21 to 23 and Comparative Examples 1 to 6) will now be described. Artificial soil particles obtained were immersed in water to be saturated with water, and then allowed to stand for 1 h, so that gravitational water was allowed to drain away. Thereafter, 100 ml of the artificial soil particles containing water were mixed with 50 ml of 20% aqueous vinyl acetate emulsion solution, followed by drying at 80°C for 48 h for solidification. A solidified mass of the artificial soil particles in the shape of a block was pulverized using a mortar, and then classified by sieving to produce an artificial soil aggregate.

A method for producing an artificial soil aggregate using a polyethylene-mixed emulsion as a binder (Example 16) will now be described. Artificial soil particles obtained were immersed in water to be saturated with water, and then allowed to stand for 1 h, so that gravitational water was allowed to drain away. Thereafter, 100 ml of the artificial soil particles containing water were mixed with 50 ml of 20% polyethylene-mixed emulsion solution. The mixture thus obtained was loaded in a granulation machine for aggregation, followed by drying at 100°C for 24 h, to produce an artificial soil aggregate.

A method for producing an artificial soil aggregate using agar as a binder (Example 17) will now be described. One hundred milliliters of artificial soil particles obtained were mixed with 50 ml of a solution of 1% agar (manufactured by Wako Pure Chemical Industries, Ltd.) at 80°C, and the mixture was cooled to room temperature, to produce a gelled product. The gelled product thus produced was dried using a drying machine at 50°C for 24 h. The resultant solid was pulverized, and then classified by sieving to produce an artificial soil aggregate.

A method for producing an artificial soil aggregate using an acrylamide as a binder (Example 18) will now be described. Artificial soil particles obtained were immersed in water to be saturated with water, and then allowed to stand for 1 h, so that gravitational water was allowed to drain away. Thereafter, 100 ml of the artificial soil particles containing water were mixed with 50 ml of 10% acrylamide solution, followed by drying at 80°C for 24 h for solidification. A solidified mass of the artificial soil particles in the shape of a block was pulverized using a mortar, and then classified by sieving to produce an artificial soil aggregate.

A method for producing an artificial soil aggregate using a urethane resin emulsion as a binder (Example 19) will now be described. Artificial soil particles obtained were immersed in water to be saturated with water, and then allowed to stand for 1 h, so that gravitational water was allowed to drain away. Thereafter, 100 ml of the artificial soil particles containing water were mixed with 50 ml of 10% urethane resin solution, followed by drying at 80°C for 24 h for solidification. A solidified mass of the artificial soil particles in the shape of a block was pulverized using a mortar, and then classified by sieving to produce an artificial soil aggregate.

A method for producing an artificial soil aggregate using ethyl cellulose as a binder (Example 20) will now be described. Artificial soil particles obtained were immersed in water to be saturated with water, and then allowed to stand for 1 h, so that gravitational water was allowed to drain away. Therefore, 100 ml of the artificial soil particles containing water were mixed with 50 ml of 10% ethyl cellulose solution, followed by drying at 80°C for 24 h for solidification. A solidified mass of the artificial soil particles in the shape of a block was pulverized using a mortar, and then classified by sieving to produce an artificial soil aggregate.

Table 1

| Components (parts by weight) | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Cation exchange materials | Zeolite | 10 | 10 | 10 | 10 | | 10 | 5 | 5 | 5 | 10 |
| | Bentonite | 1 | 1 | 1 | 1 | | 1 | | | | 1 |
| | Cation ion exchange resin | | | | | 2 | | 1 | 1 | 1 | |
| Anion exchange materials | Hydrotalcite | 10 | 10 | 10 | 10 | | 10 | 5 | 5 | 5 | 10 |
| | Anion ion exchange resin | | | | | 2 | | 1 | 1 | 1 | |
| Granulation agents | 0.5% aqueous sodium arginate solution | 100 | 100 | 100 | 100 | 100 | 100 | | 100 | 100 | 100 |
| | 1% aqueous potassium arginate solution | | | | | | | 100 | | | |
| | Agar | | | | | | | | | | |
| | Xanthan gum + locust bean gum | | | | | | | | | | |
| Granulation technique | | Ionic cross-linking using 5% aqueous calcium chloride solution | | | | | | | | | |
| Particle size distribution of artificial soil particles (μm) | | 20-50 | 20-50 | 20-50 | 75-106 | 75-106 | 75-106 | 75-106 | 75-106 | 75-106 | 250-500 |
| Aggregation binders | Vinyl acetate resin adhesive | + | + | + | + | + | + | + | + | + | + |
| | Polyethylene-mixed emulsion | | | | | | | | | | |
| | Agar | | | | | | | | | | |
| | Acrylamide | | | | | | | | | | |
| | Urethane resin emulsion | | | | | | | | | | |
| | Ethyl cellulose | | | | | | | | | | |
| Size of artificial soil aggregate (mm) | | 0.5-1 | 2-4 | 4-8 | 0.5-1 | 0.5-1 | 2-4 | 2-4 | 1-8 | 4-8 | 4-8 |
| Cation exchange capacity (meq/100 cc) | | 14 | 13 | 12 | 13 | 14 | 15 | 18 | 17 | 16 | 12 |
| Anion exchange capacity (meq/100 cc) | | 9 | 10 | 9 | 9 | 12 | 9 | 15 | 13 | 12 | 8 |
| Volumetric available moisture content rate (cc/100 cc) | | 36 | 29 | 19 | 26 | 25 | 16 | 14 | 16 | 10 | 12 |
| Gas phase fraction at pF of 1.5 (%) | | 22 | 30 | 37 | 27 | 25 | 32 | 35 | 31 | 41 | 53 |
| Growth performance of radish | | ○ | ○ | ○ | ○ | ○ | ○ | ○ | ○ | ○ | ○ |
| Note: Ex. is the abbreviation of "Example." | | | | | | | | | | | |

EP 2 939 525 A1

13

Table 2

| Components (parts by weight) | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Cation exchange materials | Zeolite | | 20 | 10 | 10 | 10 | 10 | 10 | 10 | 10 | 10 |
| | Bentonite | | 1 | 1 | 1 | 1 | 3 | 3 | 3 | 3 | 3 |
| | Cation ion exchange resin | 10 | | | | | | | | | |
| Anion exchange materials | Hydrotalcite | | 20 | 10 | 10 | 10 | 10 | 10 | 10 | 10 | 10 |
| | Anion ion exchange resin | 10 | | | | | 1 | 1 | 1 | 1 | 1 |
| Granulation agents | 0.5% aqueous sodium arginate solution | 100 | 100 | 100 | 100 | 100 | 100 | 100 | 100 | 100 | 100 |
| | 1% aqueous potassium arginate solution | | | | | | | | | | |
| | Agar | | | | | | | | | | |
| | Xanthan gum + locust bean gum | | | | | | | | | | |
| Granulation technique | | Ionic cross-linking using 5% aqueous calcium chloride solution | | | | | | | | | |
| Particle size distribution of artificial soil particles ($\mu$m) | | 250-500 | 250-500 | 500-1000 | 500-1000 | 500-1000 | 106-250 | 106-250 | 106-250 | 106-250 | 106-250 |
| Aggregation binders | Vinyl acetate resin adhesive | + | + | + | + | + | | | | | |
| | Polyethylene-mixed emulsion | | | | | | + | | | | |
| | Agar | | | | | | | + | | | |
| | Acrylamide | | | | | | | | + | | |
| | Urethane resin emulsion | | | | | | | | | + | |
| | Ethyl cellulose | | | | | | | | | | + |
| Size of artificial soil aggregate (mm) | | 4-8 | 1-8 | 1-4 | 4-8 | 1-8 | 1-4 | 1-4 | 1-4 | 1-4 | 1-4 |
| Cation exchange capacity (meq/100 cc) | | 29 | 15 | 11 | 10 | 11 | 13 | 14 | 13 | 12 | 13 |
| Anion exchange capacity (meq/100 cc) | | 25 | 11 | 8 | 8 | 8 | 10 | 10 | 9 | 9 | 10 |

14

(continued)

| Components (parts by weight) | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|
| Volumetric available moisture content rate (cc/100 cc) | 13 | 11 | 11 | 10 | 11 | 13 | 14 | 13 | 11 | 13 |
| Gas phase fraction at pF of 1.5 (%) | 47 | 48 | 52 | 56 | 52 | 38 | 33 | 39 | 44 | 40 |
| Growth performance of radish | ○ | ○ | ○ | ○ | ○ | ○ | ○ | ○ | ○ | ○ |

Note: Ex. is the abbreviation of "Example."

Table 3

| Components (parts by weight) | | Ex. 21 | Ex. 22 | Ex. 23 | C.Ex. 1 | C.Ex. 2 | C.Ex. 3 | C.Ex. 4 | C.Ex. 5 | C.Ex. 6 |
|---|---|---|---|---|---|---|---|---|---|---|
| Cation exchange materials | Zeolite | 10 | 10 | 10 | 10 | 10 | 10 | 10 | 10 | 10 |
| | Bentonite | 3 | 3 | 3 | | | | | | |
| | Cation ion exchange resin | | | | | | | | | |
| Anion exchange materials | Hydrotalcite | 10 | 10 | 10 | 10 | 10 | 10 | 10 | 10 | 10 |
| | Anion ion exchange resin | 1 | 1 | 1 | | | | | | |
| Granulation agents | 0.5% aqueous sodium arginate solution | | | | 100 | 100 | 100 | 100 | 100 | 100 |
| | 1% aqueous potassium arginate solution | | | | | | | | | |
| | Agar | 50 | 100 | | | | | | | |
| | Xanthan gum + locust bean gum | 50 | | 100 | | | | | | |
| Granulation technique | | Gelling by heating and cooling | | | Ionic cross-linking using 5% aqueous calcium chloride solution | | | | | |
| Particle size distribution of artificial soil particles ($\mu$m) | | 106-250 | 106-250 | 106-250 | $\leq 20$ | $\leq 20$ | 75-106 | 106-250 | 1000-2000 | 2000-4000 |
| Aggregation binders | Vinyl acetate resin adhesive | + | + | + | + | + | + | + | + | + |
| | Polyethylene-mixed emulsion | | | | | | | | | |
| | Agar | | | | | | | | | |
| | Acrylamide | | | | | | | | | |
| | Urethane resin emulsion | | | | | | | | | |
| | Ethyl cellulose | | | | | | | | | |
| Size of artificial soil aggregate (mm) | | 1-4 | 1-4 | 1-4 | 0.5-1 | 2-4 | $\leq 0.5$ | 12-16 | 4-8 | 4-8 |
| Cation exchange capacity (meq/100 cc) | | 14 | 14 | 13 | 13 | 12 | 12 | 12 | 11 | 10 |
| Anion exchange capacity (meq/100 cc) | | 11 | 10 | 11 | 9 | 9 | 9 | 9 | 8 | 8 |
| Volumetric available moisture content rate (cc/100 cc) | | 14 | 13 | 13 | 6 | 8 | 31 | 6 | 5 | 4 |
| Gas phase fraction at pF of 1.5 (%) | | 39 | 41 | 38 | 11 | 25 | 12 | 62 | 60 | 65 |
| Growth performance of radish | | ○ | ○ | ○ | × | Δ | Δ | Δ | Δ | Δ |
| Note: Ex. is the abbreviation of "Example." C.Ex. is the abbreviation of "Comparative Example." | | | | | | | | | | |

<Details of Test>

(1) Size of Artificial Soil Particle or Artificial Soil Aggregate

Artificial soil particles or artificial soil aggregates were previously classified by sieving into a predetermined size. The size of the classified particle or aggregate was measured by a measurement technique using image processing. This was used as a sample.

The sizes of the artificial soil particle and artificial soil aggregate were measured by optical microscopic observation and image processing described in the above section "Artificial Soil Aggregate."

(2) Cation Exchange Capacity

An extraction liquid of an artificial soil particle was produced using a general extraction and filter unit "CEC-10 Ver. 2," manufactured by Fujihira Industry Co., Ltd., and was used as a cation exchange capacity measurement sample. Thereafter, the cation exchange capacity (CEC) of the artificial soil particle was measured using a soil plant general analyzer "SFP-3," manufactured by Fujihira Industry Co., Ltd.

(3) Anion Exchange Capacity

Twenty milliliters of 0.05 M calcium nitrate solution was added to 2 g of artificial soil particles, followed by stirring for 1 h. The solution was centrifuged at room temperature for 1 min (10,000 rpm), and the supernatant was used as a measurement sample. The absorbance of the measurement sample was measured at a wavelength of 410 nm using an ultraviolet and visible spectrophotometer to obtain the calcium nitrate concentration. A difference between the calcium nitrate concentration thus obtained and the calcium nitrate concentration of a blank was used to calculate the amount of nitrate nitrogen adsorbed per unit weight, which is then converted into an anion exchange capacity (AEC) per unit volume using the specific gravity.

(4) Volumetric Moisture Content Rate of Available Water

The pF value of each sample was measured using a tensiometer. The amount of available water at a pF ranging from 1.7 to 2.3 was determined. The volumetric moisture content rate at a pF ranging from 1.7 to 2.3 is calculated using Expression (1) described in the above section "Water Retentivity and Air Permeability of Artificial Soil Aggregate."

(5) Gas Phase Fraction at pF Value of 1.5

The gravitational water of an artificial soil aggregate as a sample was allowed to drain away. After confirming that the pF value of the sample determined using a pF-meter (tensiometer) was 1.5, the sample was collected and then placed in a 100-mL sample cylinder while keeping the shape of the sample as unchanged as possible. The sample cylinder was loaded in a digital actual volumenometer "DIK-1150," manufactured by Daiki Rika Kogyo Co., Ltd., followed by measurement. The value obtained by the measurement was defined as the gas phase fraction of the artificial soil aggregate at a pF value of 1.5.

(6) Growth Performance of Radish

Seeds of a radish were planted in a surface of an upper layer, and then top-watered (once/day). The growth performance of the radish was evaluated. The growth performance of the radish was visually observed. Good growth performance is indicated by an open circle (○), bad growth performance is indicated by an open triangle (△), and failure to sprout is indicated by a cross (×).

<Results of Test>

As shown in Tables 1 to 3, the volumetric moisture content rates of the artificial soil aggregates of Examples 1 to 23 at a pF ranging from 1.7 to 2.3 were adjusted to the range of 10 to 40%, and the gas phase fractions at a pF of 1.5 thereof were adjusted to the range of 20 to 80%. Therefore, the growth performance of the radish was good. In contrast to this, for the artificial soil aggregates of Comparative Examples 1 to 6, at least either of the volumetric moisture content rate at a pF ranging from 1.7 to 2.3 and the gas phase fraction at a pF of 1.5 was out of the appropriate range, and therefore, the growth performance of the radish was bad. In particular, for Comparative Example 1, the volumetric moisture content rate and gas phase fraction ranges were out of their appropriate ranges, and therefore, the radish did not even sprout. Also, because the artificial soil aggregate of the present invention has a communication hole and a first interstice, and therefore, the volumetric moisture content rate at a pF ranging from 1.7 to 2.3 and the gas phase fraction at a pF of 1.5 were able to be easily adjusted to the above ranges, and in addition, the quality was stable. Thus, it was demonstrated that the artificial soil aggregate of the present invention has a well-balanced volumetric moisture content rate and gas phase fraction, and therefore, may be a high value-added product which can be used in a plant factory, etc.

INDUSTRIAL APPLICABILITY

The artificial soil aggregate and artificial soil medium of the present invention are applicable to artificial soils for use in a plant factory, etc., and other applications, such as indoor horticultural soils, greening soils, molded soils, soil conditioners, soils for interior decoration, etc.

REFERENCE SIGNS LIST

1       ARTIFICIAL SOIL AGGREGATE
2       FIRST INTERSTICE
10      ARTIFICIAL SOIL PARTICLE
11      SMALL HOLE
12      FILLER
13      COMMUNICATION HOLE

**Claims**

1. An artificial soil aggregate which is an aggregate of artificial soil particles in which a plurality of fillers having a small hole ranging from the subnanometer to the submicrometer scale are clustered together, a communication hole ranging from the submicrometer to the submillimeter scale being formed between the fillers, **characterized in that** the artificial soil aggregate has a volumetric moisture content rate of 10 to 40% at a pF ranging from 1.7 to 2.3, and a gas phase fraction of 20 to 80% at a pF of 1.5.

2. The artificial soil aggregate of claim 1, **characterized in that**
   a first interstice ranging from the micrometer to the millimeter scale is formed between the artificial soil particles.

3. The artificial soil aggregate of claim 2, **characterized in that**
   the first interstice has a size of 5 to 100 $\mu$m.

4. The artificial soil aggregate of any one of claims 1 to 3, **characterized in that**
   the artificial soil aggregate has a size of 0.2 to 10 mm.

5. The artificial soil aggregate of any one of claims 1 to 4, **characterized in that**
   the artificial soil particles have a particle size distribution of 5 to 1000 $\mu$m.

6. The artificial soil aggregate of any one of claims 1 to 5, **characterized in that**
   the small hole has ion exchange capability.

7. The artificial soil aggregate of any one of claims 1 to 6, **characterized in that**
   the artificial soil aggregate includes a water retention material.

8. An artificial soil medium **characterized in that** it comprises:

   the artificial soil aggregate of any one of claims 1 to 7.

[Figure 1]

[Figure 2]

[Figure 3]

## INTERNATIONAL SEARCH REPORT

| International application No. |
| --- |
| PCT/JP2013/084226 |

A. CLASSIFICATION OF SUBJECT MATTER
*A01G1/00*(2006.01)i, *C09K17/08*(2006.01)n

According to International Patent Classification (IPC) or to both national classification and IPC

B. FIELDS SEARCHED

Minimum documentation searched (classification system followed by classification symbols)
A01G1/00, C09K17/08

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2002-335747 A (Tetra Co., Ltd.), 26 November 2002 (26.11.2002), paragraphs [0025] to [0036]; fig. 2, 3 (Family: none) | 1-8 |
| Y | JP 5-176643 A (Shigeru MASUDA), 20 July 1993 (20.07.1993), paragraphs [0011] to [0020], [0026], [0027] (Family: none) | 1-8 |
| Y | JP 2002-80284 A (Aisin Takaoka Co., Ltd.), 19 March 2002 (19.03.2002), paragraphs [0017] to [0024] (Family: none) | 6 |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 18 March, 2014 (18.03.14) | Date of mailing of the international search report 01 April, 2014 (01.04.14) |
| Name and mailing address of the ISA/ Japanese Patent Office | Authorized officer |
| Facsimile No. | Telephone No. |

Form PCT/ISA/210 (second sheet) (July 2009)

22

**INTERNATIONAL SEARCH REPORT**

| | International application No. |
|---|---|
| | PCT/JP2013/084226 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 62-95138 A  (Nitto Electric Industrial Co., Ltd.), 01 May 1987 (01.05.1987), claims; page 3, lower left column, lines 10 to 17 (Family: none) | 7 |
| A | JP 2005-318891 A  (Obayashi Corp.), 17 November 2005 (17.11.2005), (Family: none) | 1-8 |
| A | JP 2003-92924 A  (Sumitomo Forestry Co., Ltd.), 02 April 2003 (02.04.2003), (Family: none) | 1-8 |
| P,A | JP 2013-78293 A  (Toyo Tire and Rubber Co., Ltd.), 02 May 2013 (02.05.2013), (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000336356 A

- JP S5323892 B